# EUROPÄISCHE PATENTSCHRIFT

(11) **EP 0 901 430 B1**
(45) Veröffentlichungstag und Bekanntmachung des Hinweises auf die Patenterteilung: **09.02.2000**
(21) Anmeldenummer: 97922803.8
(22) Anmeldetag: 04.06.1997
(51) Int. Cl.: B60R 13/02, B60R 21/04

(54) **SCHOCKABSORBIERENDE INNENVERKLEIDUNG**
SHOCK-ABSORBING INNER LINING
HABILLAGE INTERIEUR AMORTISSANT LES CHOCS

(30) Priorität: 05.06.1996 CH 141596
(43) Veröffentlichungstag der Anmeldung: 17.03.1999
(73) Patentinhaber: RIETER AUTOMOTIVE (INTERNATIONAL) AG, CH-8702 Zollikon (CH)
(72) Erfinder: RENAULT, Eric, F-78410 Aubergenville (FR)
(74) Vertreter: Ritscher, Thomas, Dr.Rer.Nat.Dipl.-Chem.
(86) Internationale Anmeldenummer: CH9700226
(87) Internationale Veröffentlichungsnummer: WO9746423

(56) Entgegenhaltungen:
- DE-A- 3 742 233
- DE-A- 4 426 291
- DE-U- 8 201 511
- DE-U- 29 601 143
- US-A- 5 088 576

## Beschreibung

Die vorliegende Erfindung betrifft eine Innenverkleidung für Motorfahrzeuge gemäss Oberbegriff des Anspruch 1 (siehe DE-A-4- 426 291).
Bei Frontalkollisionen von Personenfahrzeugen werden Fahrer und Beifahrer gegen die Frontpartie des Fahrgastraums geschleudert. Die dadurch verursachten schweren Verletzungen der Passagiere werden heute mit Hilfe von Sicherheitsgurten und Airbags zu einem grossen Teil verhindert oder zumindest verringert. Leider können jedoch diese Sicherheitsmassnahmen nicht verhindern, dass bei einem solchen Aufprall Beine und Füsse der Passagiere gegen die Frontpartie geschleudert werden und in der Fusszone aufschlagen. Diese Schlägen wirken sich auch auf den Beckenbereich aus und können dort zu komplizierten Verletzungen führen.

Es ist deshalb das Bestreben der modernen Automobilindustrie, den Fussraum der Fahrzeuge mindestens im Frontbereich mit schockabsorbierenden Mitteln auszurüsten, ohne dabei die Bewegungsfreiheit der Passagiere und insbesondere den Fussraum im Innern der Fahrgastzelle zu verringern.

In herkömmlichen Fahrzeugen der gehobenen Mittelklasse und in Lastwagen ist der Fussraum der Fahrgastzelle mit einer ca. 35 mm dicken Verkleidung ausgerüstet. Diese Verkleidung umfasst in der Regel eine mehr oder weniger teure Teppichlage, die mit einer akustisch wirksamen Isolationsschicht hinterlegt ist. Solche schallisolierenden Verbundsysteme sind hinlänglich bekannt und bspw. in der US-5'088'576 beschrieben. Bei diesen Systemen ist der Teppichflor auf einer gummielastischen Unterschicht aufgebracht oder mit einer zusätzlichen biegeweichen und relativ schweren Trägerschicht (vom Fachmann jeweils als Schwerschicht oder Masseschicht bezeichnet) verbunden, und mit einer weichelastischen und möglichst leichten Vlies- oder Schaumschicht (vom Fachmann auch als Federschicht bezeichnet), kombiniert. Solche Feder-Masse-Systeme erlauben es, die durch die Vibrationen des Fahrzeugbodens verursachten Geräusche zu eliminieren - besondere schockabsorbierende Eigenschaften weisen diese Verbundsysteme jedoch nicht auf.

Eine zusätzliche schockabsorbierende Schicht würde aber entweder die Gesamtdicke der Innenverkleidung weiter erhöhen, oder wäre nur auf Kosten der Schallisolation mit der Teppichlage zu kombinieren.

Die DE-44 26 291 beschreibt eine Innenverkleidung mit einem Aufprallschutz. Dieser Aufprallschutz weist im wesentlichen eine Platte mit einer Vielzahl kegelförmiger Abstützelemente auf. In einer besonderen Ausführungsform liegen die einzelnen Abstützelemente in spiegelsymmetrischer Weise an korrespondierenden Gegenelementen an. Dieser Aufbau soll im folgenden als nächstliegender Stand der Technik betrachtet werden.

Aufgabe der vorliegenden Erfindung ist es deshalb, eine Innenverkleidung für Motorfahrzeuge zu schaffen, welche bei einer vorgegebenen Dicke sowohl schockabsorbierende als auch schallisolierende Eigenschaften aufweist, d.h. einerseits genügend steif ist, um den Kraftstoss bei einem Aufprall gezielt vermindern zu können und andererseits genügend weich ist, um Fahrzeugvibrationen wirkungsvoll zu isolieren, ohne dabei eine vorgegebene Dicke zu überschreiten. Insbesondere soll eine ca. 35 mm dicke schockabsorbierende Teppichlage geschaffen werden, die bei einer Aufprallenergie von 90 Joule nur Kraftstösse von weniger als 400 daN zulässt und mit welcher gleichzeitig eine akustische Isolation von mindestens ca. 20 dB im Bereich von 600 Hz erreicht wird.

Diese gegensätzlichen technischen Anforderungen werden erfindungsgemäss durch eine Innenverkleidung mit den Merkmalen des Anspruchs 1 erfüllt und insbesondere durch eine Innenverkleidung realisiert, welche eine Vielzahl über die gesamte Fläche verteilte schockabsorbierende und schallisolierende Bereiche aufweist, wobei mindestens die schockabsorbierenden Bereiche durch eine Entkopplerschicht vom Fahrzeugboden getrennt sind.

Der erfindungsgemässe Aufbau dieser Innenverkleidung entspricht einem Feder-Masse-System, bei welchem die Masse-Schicht fahrgastraumseitig angeordnet ist und mit der Teppichlage kombiniert sein kann, und bei welchem in die darunterliegende Federschicht eine schockabsorbierende Struktur eingebracht ist. Diese schockabsorbierende Struktur ist bereichsweise über die gesamte Fläche verteilt, d.h. greift nur lokal in die Federschicht ein. Dies erlaubt es, die schockabsorbierenden und schallisolierenden Funktionen des Verkleidungsteils entsprechend dessen besonderen Geometrie und Anwendung zu optimieren. Insbesondere kann das Verhältnis zwischen den schockabsorbierenden Bereichen und den Federschichtbereichen variiert werden, was sich bspw. bei unterschiedlich stark geneigten Verkleidungen als vorteilhaft erweist. Der erfindungsgemässe Aufbau erlaubt es also, dass die normalen Vibrationen des Fahrzeugbodens an das akustisch isolierende Feder-Masse-System (bspw. Luftfeder) gekoppelt werden, während diese Vibrationen wegen der Entkopplerschicht nicht in die Bereiche der schockabsorbierenden Struktur übertragen werden können. Diese Entkopplerschicht weist deshalb eine hohe Porosität und ein sehr geringes dynamisches Elastizitätsmodul (Young's Module) auf. Damit kann weder das Gerüst dieser Entkopplerschicht (Schaum, Vlies oder Flocken), noch die darin eingeschlossene Luft eine wesentliche Federwirkung ausüben. Vielmehr strömt die in diesem Gerüst enthaltene Luft frei zwischen den Bereichen der Federschicht und kann innerhalb dieser Gerüststruktur nicht komprimiert werden.

Die maximal absorbierbare Energie resp. Aufschlagkraft wird im wesentlichen durch die besondere Materialwahl der schockabsorbierenden Bereiche und deren Verteilung über die gesamte Fläche der Verkleidung bestimmt.

Es versteht sich, dass die Federschichtbereiche mit Luft (dynamisches Elastizitätsmodul > 1 daN/cm²) oder einer geeigneten porösen Masse gefüllt sind. Solche Massen sind dem Fachmann auf dem Gebiet der Schallisolation hinlänglich bekannt und können von diesem in gewünschter Weise ausgewählt werden. Die geometrische Gestaltung der akustisch wirksamen Federschichtbereiche und schockabsorbierenden Bereiche kann ebenfalls vom Fachmann in geeigneter Weise optimiert werden. So können bspw. die in die Federschicht hereinragenden Auflageelemente napfartig ausgehöhlt sein, um bspw. die dynamische Härte der schockabsorbierenden Struktur zu optimieren. Diese Auflageelemente können über einzelne Brücken oder flächig miteinander verbunden sein oder individuell und unabhängig voneinander an die Masseschicht gekoppelt sein. Ebenso kann die Entkopplerschicht uniform über die gesamte Auflagefläche der Verkleidung oder nur lokal im Bereich der schockabsorbierenden Auflageelemente angebracht sein. Diese Entkopplerschicht kann aus einem Vlies, aus Flocken oder aus einem Schaum gefertigt sein. Die verwendeten Masseschichten, Federbereiche oder schockabsorbierenden Bereiche können selbstverständlich aus einer einzelnen oder aus mehreren Schichten gefertigt sein und unterschiedliche geometrische Ausgestaltungen aufweisen. Insbesondere kann das gesamte Verkleidungsteil lokal unterschiedliche Dicken und physikalischen Eigenschaften aufweisen.

Im folgenden sollen Ausführungsbeispiele der Erfindung anhand der Figuren näher erläutert werden.
- Fig. 1: zeigt eine räumliche Darstellung einer bevorzugten Ausführungsform der erfindungsgemässen Innenverkleidung;
- Fig. 2: zeigt einen Schnitt durch eine zweite Ausführungsform der erfindungsgemässen Innenverkleidung;
- Fig. 3: zeigt einen Schnitt durch eine dritte Ausführungsform der erfindungsgemässen Innenverkleidung;
- Fig. 4: zeigt einen Schnitt durch eine vierte Ausführungsform der erfindungsgemässen Innenverkleidung;
- Fig. 5: zeigt einen Schnitt durch eine fünfte Ausführungsform der erfindungsgemässen Innenverkleidung.

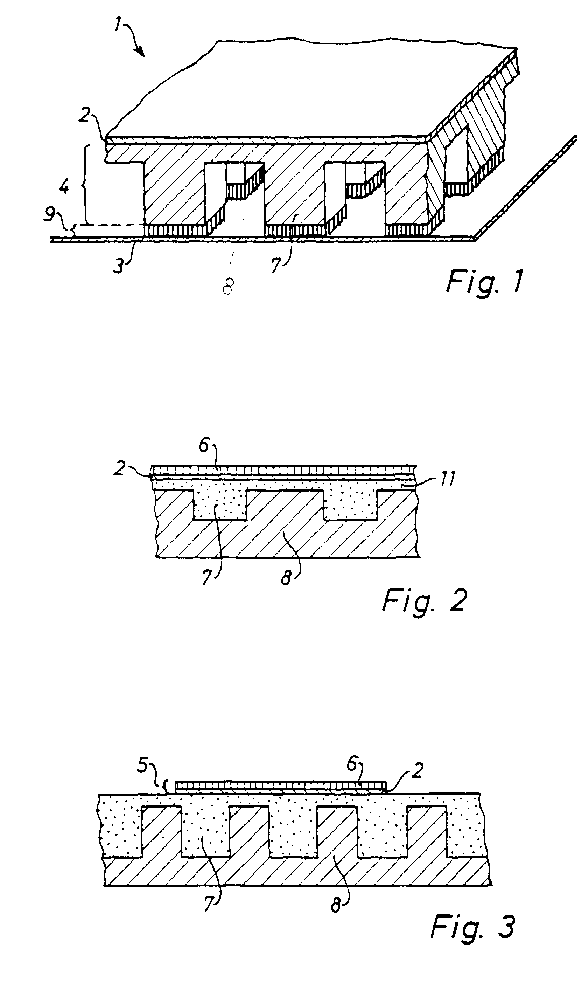

In den Figuren 2, 3 und 5 ist die Entkopplerschicht nicht dargestellt.
Die in Figur 1 dargestellte Ausführungsform der erfindungsgemässen Innenverkleidung 1 umfasst fahrgastraumseitig eine Schwerschicht 2, welche entweder eine geeignete gummielastische Unterschicht eines Teppichs 5 oder eine florfreie Schwerschicht 2 sein kann, wie sie heute im Fachhandel unter dem Namen SEPTUM® erhältlich ist. Zwischen dieser Schwerschicht 2 und dem Fahrzeugboden 3 ist eine mittlere Schicht 4 vorgesehen, welche eine Vielzahl schockabsorbierende Elemente 7 und Federschichtbereiche 8 aufweist. Eine Entkopplerschicht 9 entkoppelt den Fahrzeugboden 3 von den relativ steifen schockabsorbierenden Elementen 7. Die schockabsorbierenden Elemente 7 der mittleren Schicht 4 sind in der bevorzugten Ausführungsform aus steifen Elementen 7 gebildet und können beliebig geformt sein.
Dieser erfindungsgemässe Aufbau entspricht einem Feder-Masse-System, bei welchem die Masseschicht 2 mit einer Vielzahl steifer Elemente 7 verbunden ist, welche in die Federschicht 8 (Luftfeder) hineinragen. Diese Elemente 7 sind derart gewählt, dass diese eine Aufprallenergie von ca. 90 Joules vollständig in Deformationsarbeit umwandeln können. Im vorliegenden Ausführungsbeispiel bestehen diese schockabsorbierenden Elemente 7 aus geschäumtem Polystyrol mit 60 kg/m³ Dichte, bedecken ca. 50% der Auflagefläche und weisen eine Steifigkeit auf, bei welcher eine Aufschlagkraft von ca. 600 daN eine 33 mm dicke Verkleidung (5 mm Schwerschicht, 35 geschäumtes Polystyrol, 3 mm Glasfasermatte) auf eine Dicke von 3.5 mm komprimiert. Die Entkopplerschicht 9 weist einen sehr geringen Luftströmungswiderstand und ein relativ geringes dynamisches Elastizitätsmodul (< 0.1 daN/cm²) auf, d.h. ist stark luftdurchlässig und kaum elastisch. Dies verhindert, dass die Vibrationen des Fahrzeugbodens an die steifen und schockabsorbierenden Elemente 7 der mittleren Schicht 4 übertragen werden. Die in der Entkopplerschicht 9 eingeschlossene Luft kann damit bei Vibrationen des Fahrzeugbodens im wesentlichen ungehindert in dieser Schicht zirkulieren. Die eigentliche Federung dieses Feder-Masse-Systems wird ausschliesslich von der in den, zwischen den schockabsorbierenden Elementen 7 liegenden, Federschichtbereichen 8 enthaltenen Luft übernommen.

In der bevorzugten Ausführungsform gemäss Figur 1 weist die Entkopplerschicht eine Dicke von ca. 2 mm auf und besteht aus einem Glasfaservlies. Die maximal auffangbare Aufprallkraft wird im wesentlichen durch das verwendete Material, durch das Verhältnis von Auflagefläche der schockabsorbierenden Elemente 7 zur Gesamtfläche, und durch die Dicke dieser schockabsorbierenden Elemente 7 bestimmt. Dieses Ausführungsbeispiel weist im Frequenzbereich von 600 Hz eine akustische Isolation von ca. 20 dB auf.

Bei der in Figur 2 dargestellten Ausführungsform wird die Federschicht 8 aus einem akustisch wirksamen Schaum gebildet und ragen die steifen Elemente 7 nur geringfügig in diese Federschicht. Insbesondere beträgt die Tiefe der steifen Elemente 7 20 mm und ist die Dicke des Feder-Masse-Systems 28 mm. Die fahrgastseitig aufliegende Schwerschicht 2 weist eine Dicke von 2 mm auf und trägt einen Teppichflor 6.

In der dritten Ausführungsform gemäss Figur 3 ist die Schwerschicht 2 Bestandteil eines Teppichs 5. Die einzelnen schockabsorbierenden Elemente 7 können strukturiert sein oder nicht und weisen in diesem Ausführungsbeispiel eine Höhe von 20 mm auf. In diesem und den beiden oben genannten Ausführungsformen sind die steifen Elemente 7 flächig miteinander verbunden. Die Federschicht 8 wird wiederum durch einen Schaum gebildet, kann aber selbstverständlich aus einem Vlies aufgebaut sein.

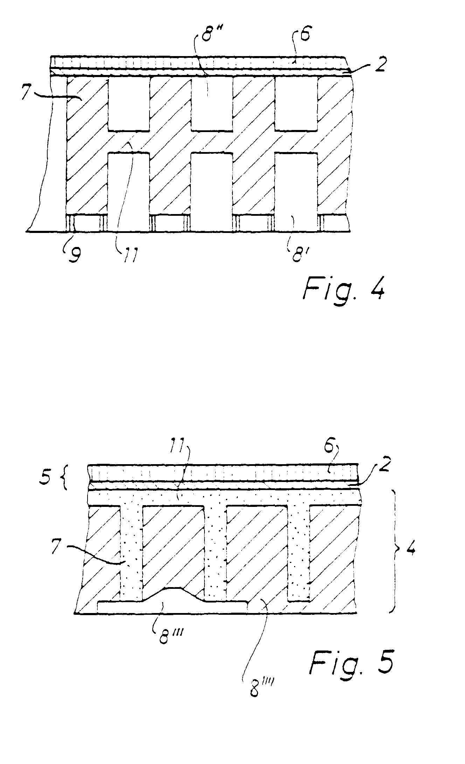

In Figur 4 werden eine Vielzahl von schockabsorbierenden Elementen 7 gezeigt, welche mittig über Stege 11 miteinander verbunden sind. Die dazwischen liegenden Hohlräume sind nicht gefüllt und bilden ein miteinander kommunizierendes Hohlraumsystem. Damit kann die akustische Wirksamkeit wesentlich erhöht werden. Die Entkopplerschicht 9 ist nur im Bereich dieser steifen Elemente 7 angeordnet, könnte sich aber über die gesamte Fläche erstrecken. Es versteht sich, dass die Verbindungsstege 11 zwischen den einzelnen steifen Elementen 7 flächig ausgebildet sein können und damit zwei voneinander unabhängige Federschichten 8' und 8'' gebildet werden.

In einer weiteren Ausführungsform gemäss Figur 5 ist die gesamte Federschicht aus Luftfeder- 8"' und Schaumgerüstbereichen 8"" zusammengesetzt. Bei dieser Ausführungsform weisen die steifen Elemente 7 wegen ihrer erhöhten Härte einen geringeren Durchmesser auf.

Für jedes dieser Ausführungsbeispiele zeigen sich Schäume aus festem Polyurethan, Polypropylen, oder Polystyrol (Caryl) als besonders geeignet. Es versteht sich, dass für die Federschicht 8 auch geschäumter Kautschuk in Betracht gezogen werden kann.

## Patentansprüche

1. Schockabsorbierende Innenverkleidung für Motorfahrzeuge, welche Innenverkleidung (1) eine fahrgastraumseitige Deckschicht (2), eine mittlere Schicht (4) mit einer Vielzahl von schockabsorbierenden Elementen (7), die in eine Federschicht (8) hineinragen und eine fahrzeugbodenseitige Basisschicht (9) umfasst, dadurch gekennzeichnet, dass die Deckschicht (2) aus einer gummielastischen Schwerschicht (2) besteht, und dass die Basisschicht (9) eine Entkopplerschicht ist, die mindestens in den Bereichen der schockabsorbierenden Elemente (7) angeordnet ist, und welche ein dynamisches Elastizitätsmodul von < 0.1 daN/cm² und einen geringen Luftströmungswiderstand aufweist.

2. Innenverkleidung nach Anspruch 1, dadurch gekennzeichnet, dass die schockabsorbierenden Elemente (7) ein Flächengewicht von weniger als 100 kg/m² aufweisen und insbesondere aus geschäumten Polyurethan, Polypropylen, Polystyrol oder einem Vlies bestehen.

3. Innenverkleidung nach einem der Ansprüche 1 oder 2, dadurch gekennzeichnet, dass die schockabsorbierenden Elemente (7) der mittleren Schicht (4) etwa 40% bis 60% der gesamten Fläche der schockabsorbierenden Innenverkleidung (1) ausmachen.

4. Innenverkleidung nach einem der Ansprüche 1 bis 3, dadurch gekennzeichnet, dass die schockabsorbierenden Elemente (7) über die gesamte Fläche der Innenverkleidung gleichmässig verteilt sind.

5. Innenverkleidung nach einem der Ansprüche 1 bis 3, dadurch gekennzeichnet, dass die schockabsorbierenden Elemente (7) über die gesamte Fläche der Innenverkleidung ungleichmässig verteilt sind.

6. Innenverkleidung nach einem der Ansprüche 1 bis 5, dadurch gekennzeichnet, dass die schockabsorbierenden Elemente (7) über Verbindungselemente (11) miteinander verbunden sind.

7. Innenverkleidung nach einem der Ansprüche 1 bis 6, dadurch gekennzeichnet, dass die Schwerschicht (2) Teil eines Teppichs (5) ist.

8. Innenverkleidung nach Anspruch 7, dadurch gekennzeichnet, dass die Schwerschicht (2) mit den schockabsorbierenden Elementen (7) verbunden, insbesondere verklebt oder verschmolzen ist.

9. Innenverkleidung nach einem der Ansprüche 1 bis 8, dadurch gekennzeichnet, dass die Federschicht (8) aus einem offenporigen Schaum oder einem Vlies gebildet ist.

10. Innenverkleidung nach einem der Ansprüche 1 bis 9, dadurch gekennzeichnet, dass sich die Entkopplerschicht (9) über die gesamte Fläche der Innenverkleidung (1) erstreckt.

## Claims

1. Shock absorbing liner for motor vehicles, said liner (1) comprising a covering layer (2) on the side of the passenger compartment, a middle layer (4) with a multitude of shock absorbing elements (7), said elements (7) projecting into a spring layer (8), and a base layer (9) on the vehicle bottom side, characterized in that said covering layer (2) comprises a rubber-elastic heavy layer (2), and that said base layer (9) comprises a decoupling layer (9) which is arranged at least in the regions of the shock absorbing elements (7), and which has a Young's module of < 0.1 daN/cm².

2. Liner according to claim 1, characterized in that the shock absorbing elements (7) have a weight by surface area of less than 100 kg/m² and in particular are made of foamed polyurethane, polypropylene, polystyrene or a fleece.

3. Liner according to one of claims 1 or 2, characterized in that the shock absorbing elements (7) of the middle layer (4) make up around 40% to 60% of the entire surface of the shock absorbing liner.

4. Liner according to one of claims 1 to 3, characterized in that the shock absorbing elements (7) are evenly distributed over the entire surface of the liner.

5. Liner according to one of claims 1 to 3, characterized in that the shock absorbing elements (7) are unevenly distributed over the entire surface of the liner.

6. Liner according to one of claims 1 to 5, characterized in that the shock absorbing elements (7) are connected to each other via bridge-like links (11).

7. Liner according to one of claims 1 to 6, characterized in that the heavy layer (2) is part of a carpet (5).

8. Liner according to claim 7, characterized in that the heavy layer (2) is connected, and in particular is adhesively connected or melted with the shock absorbing elements (7).

9. Liner according to one of claims 1 to 8, characterized in that the spring layer (8) is an open-pored foam or a fleece.

10. Liner according to one of claims 1 to 9, characterized in that the decoupling layer (9) extends over the entire area of the liner (1).

## Revendications

1. Habillage intérieur amortissant les chocs pour des véhicules automobiles, lequel habillage intérieur (1) comporte une couche de revêtement (2) située du côté de l'habitacle, une couche médiane (4) possédant une multiplicité d'éléments (7) absorbant les chocs et qui pénètre dans une couche élastique (8), et une couche de base (9) située du côté du plancher du véhicule, caractérisé en ce que la couche de revêtement (2) est constituée par une couche robuste (2) présentant l'élasticité du caoutchouc et la couche de base (9) est une couche de découplage, qui est disposée au moins dans les zones des éléments (7) absorbant les chocs et qui possède un module d'élasticité dynamique < 0,1 daN/cm² et une faible résistance à la circulation de l'air.

2. Habillage intérieur selon la revendication 1, caractérisé en ce que les éléments (7) absorbant les chocs possèdent un poids spécifique inférieur à 100 kg/m² et sont constitués notamment par une mousse de polyuréthane, de polypropylène, de polystyrène ou une nappe de non tissé.

3. Habillage intérieur selon l'une des revendications 1 ou 2, caractérisé en ce que les éléments (7) absorbant les chocs de la couche médiane (4) occupent environ 40 % à 60 % de l'ensemble de la surface de l'habillage intérieur (1) absorbant les chocs.

4. Habillage intérieur selon l'une des revendications 1 à 3, caractérisé en ce que les éléments (7) absorbant les chocs sont répartis uniformément sur toute la surface de l'habillage intérieur.

5. Habillage intérieur selon l'une des revendications 1 à 3, caractérisé en ce que les éléments (7) absorbant les chocs sont répartis d'une manière non uniforme sur toute la surface de l'habillage intérieur.

6. Habillage intérieur selon l'une des revendications 1 à 5, caractérisé en ce que les éléments (7) absorbant les chocs sont reliés entre eux au moyen d'éléments de liaison (11).

7. Habillage intérieur selon l'une des revendications 1 à 6, caractérisé en ce que la couche robuste (2) fait partie d'un tapis (5).

8. Habillage intérieur selon l'une des revendications 7, caractérisé en ce que la couche robuste (2) est reliée, notamment par collage ou par fusion, aux éléments (7) absorbant les chocs.

9. Habillage intérieur selon l'une des revendications 1 à 8, caractérisé en ce que la couche élastique (8) est constituée par une mousse à pores ouverts ou par une nappe de non tissé.

10. Habillage intérieur selon l'une des revendications 1 à 9, caractérisé en ce que la couche de découplage (9) s'étend sur toute la surface de l'habillage intérieur (1).
